(19) Europäisches Patentamt
European Patent Office
Office européen des brevets

(11) Veröffentlichungsnummer: 0 355 433 A2

# (12) EUROPÄISCHE PATENTANMELDUNG

(21) Anmeldenummer: 89113632.7

(22) Anmeldetag: 24.07.89

(51) Int. Cl.4: C08G 18/08 , C08G 18/40 , C09D 175/04

(30) Priorität: 26.07.88 DE 3825278

(43) Veröffentlichungstag der Anmeldung: 28.02.90 Patentblatt 90/09

(84) Benannte Vertragsstaaten: ES

(71) Anmelder: BASF Lacke + Farben Aktiengesellschaft
Max-Winkelmann-Strasse 80
D-4400 Münster(DE)

(72) Erfinder: Hille, Hans-Dieter
In der Schlade 24
D-5060 Bergisch-Gladbach(DE)

Erfinder: Dobbelstein, Arnold, Dr.
Emil-Nolde-Weg 95
D-4400 Münster(DE)
Erfinder: Wieditz, Stefan, Dr.
Am Brockhoff 15
D-4400 Münster(DE)
Erfinder: Müller, Horst
Pilzweg 10
D-5000 Köln 80(DE)

(74) Vertreter: Leifert, Elmar, Dr.
BASF Lacke + Farben AG Patentabteilung
Max-Winkelmann-Strasse 80 Postfach 61 23
D-4400 Münster(DE)

## (54) Verfahren zur Herstellung von mehrschichtigen, schützenden und / oder dekorativen Überzügen auf Substratoberflächen.

(57) Die Erfindung betrifft ein Basecoat/Clearcoat-Verfahren, bei dem die eingesetzte Basisbeschichtungszusammensetzung als filmbildendes Material ein Polyurethanharz enthält, das herstellbar ist, indem aus

(A) einer Mis hung aus 10 bis 90 mol% linearen Polyetherdiolen und 90 bis 10 mol% Polyesterdiolen,

(B) Diisocyanaten,

(C) Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, ein Zwischenprodukt hergestellt worden ist, dessen freie Isocyanatgruppen anschließend mit

(D) mindestens drei Hydroxylgruppen enthaltenden Polyolen, umgesetzt worden sind und das so gewonnene Reaktionsprodukt in eine wäßrige Phase überführt worden ist,

wobei

a) das Polyesterdiol aus Diolen und einer Säurekomponente, die zu 60 bis 100 Gew.% aus aliphatischen Dicarbonsäuren mit mehr als 18 C-Atomen und zu 40 bis 0 Gew.% aus aliphatischen Dicarbonsäuren mit 2 bis 18 C-Atomen besteht, hergestellt worden ist,

b) das Äquivalentverhältnis der NCO-Gruppen zu der Summe der OH-Gruppen von (A) und der reaktiven Gruppen von (C) 2:1 bis ,05:1 beträgt und

c) das Äquivalentverhältnis der OH-Gruppen der Komponente (D) zu den NCO-Gruppen des Zwischenproduktes 0,5:1 bis 4:1 beträgt.

EP 0 355 433 A2

# Verfahren zur Herstellung von mehrschichtigen, schützenden und/oder dekorativen Überzügen auf Substratoberflächen

Die Erfindung betrifft ein Verfahren zur Herstellung von mehrschichtigen, schützenden und/oder dekorativen Überzügen auf Substratoberflächen, wasserverdünnbare Überzugsmittel auf der Basis eines Polyurethanharzes als filmbildendem Material zur Herstellung der Überzüge sowie die Verwendung dieser wasserverdünnbaren Überzugsmittel zur Herstellung von mehrschichtigen, schützenden und/oder dekorativen Überzügen auf Substratoberflächen.

Insbesondere bei der Automobillackierung, aber auch in anderen Bereichen in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen.

Mehrschichtlackierungen werden bevorzugt nach dem sog. "Basecoat-Clearcoat"-Verfahren aufgebracht, d.h. es wird ein pigmentierter Basislack vorlackiert und nach kurzer Ablüftzeit ohne Einbrennschritt ("Naß-in-Naß"-Verfahren) mit Klarlack überlackiert. Anschließend werden Basislack und Klarlack zusammen eingebrannt.

Besonders große Bedeutung hat das "Basecoat-Clearcoat"-Verfahren bei der Applikation von Automobil-Metalleffektlacken erlangt.

Wirtschaftliche und ökologische Gründe haben dazu geführt, daß versucht wurde, bei der Herstellung von Mehrschichtüberzügen wäßrige Basisbeschichtungszusammensetzungenn einzusetzen.

Überzugsmittel zur Herstellung von Basisschichten für mehrschichtige Automobillackierungen müssen nach dem heute üblichen rationellen "Naß-in-Naß"-Verfahren verarbeitbar sein, d.h. sie müssen nach einer möglichst kurzen Vortrocknungszeit mit einem (transparenten) Deckschicht überlackiert werden können, ohne störende Anlöseerscheinungen zu zeigen.

Bei der Entwicklung von Überzugsmitteln für Basisschichten von Metalleffektlacken müssen außerdem noch weitere Probleme gelöst werden. Der Metalleffekt hängt entscheidend von der Orientierung der Metallpigmentteilchen im Lackfilm ab. Ein im "Naß-in-Naß"-Verfahren verarbeitbarer Metalleffektbasislack muß demnach Lackfilme liefern, in denen die Metallpigmente nach der Applikation in einer günstigen räumlichen Orientierung vorliegen und in denen diese Orientierung schnell so fixiert wird, daß sie im Laufe des weiteren Lackierprozess es nicht gestört werden kann.

Bei der Entwicklung von wasserverdünnbaren Systemen, die die oben beschriebenen Forderungen erfüllen sollen, treten auf die besonderen physikalischen Eigenschaften des Wassers zurückzuführende, schwer zu lösende Probleme auf, und bis heute sind nur wenige wasserverdünnbare Lacksysteme bekannt, die als Basisbeschichtungszusammensetzungen im oben dargelegten Sinne verwendet werden können.

So sind beispielsweise aus der DE 35 45 618 Verfahren gemäß Oberbegriff des Hauptanspruchs sowie wäßrige Überzugsmittel zur Herstellung von Basisschichten für mehrschichtige Lackierungen bekannt. In bezug auf die Belastbarkeit des Schichtenaufbaus im Schwitzwasserkonstantklima nach DIN 50017 (Ausgabe Oktober 1982) und in bezug auf den nach mehrwöchiger Lagerung der wäßrigen Basisbeschichtungszusammensetzung erzielbaren metallischen Effekt (kurz Effektstabilität genannt) sind das Verfahren bzw. die Überzugsmittel noch verbesserungsbedürftig.

Auch aus der EP-A-256 540 ist ein "Naß-in-Naß"-Verfahren für die Mehrschichtlackierung bekannt. Die dort eingesetzten Basislacke enthalten als filmbildendes Material ein Gemisch aus 1) 90 bis 40 Gew.% eines hydroxylgruppenhaltigen Polymerisatharzes und 2) 10 bis 60 Gew.% einer Polyurethandispersion, wobei die Summe der Komponenten 1) und 2) stets 100 Gew.% ergibt. Die verwendeten harnstoffgruppenhaltigen Polyurethandispersionen führen aber zu schnell trocknenden Überzugsmitteln, die für eine praktische Verwendung vor allem in Serienlackierprozessen ungeeignet sind, weil sie in den zur Anwendung kommenden Applikationsgeräten so gut haften, daß sie nur unter großen Schwierigkeiten wieder entfernt werden können. Dadurch ist ein vor allem in der Automobilserienlackierung sehr oft schnell durchzuführender Wechsel der applizierten Lacksysteme (z.B. Farbtonwechsel) nicht möglich.

Zusätzlich sind die Überzugsmittel der EP-A 256 540 noch in bezug auf die Haftung und die Steinschlagbeständigkeit verbesserungsbedürftig.

Aus der US-PS 4,423,179 sind wäßrige und lösemittelhaltige Polyurethan-Beschichtungsmassen bekannt, die als Härter 5 bis 50 Gew.%, bezogen auf Härter plus Bindemittel, Aminoplastharze enthalten. Die Polyurethan-Bindemittelkomponente wird in einer Menge von 50 bis 95 Gew.%, bezogen auf Härter plus Bindemittel, eingesetzt und hergestellt durch Umsetzung eines Diisocyanates mit einem Polyesterpolyol und ggf. anderen hydroxylgruppenhaltigen Verbindungen. Die eingesetzten Polyesterpolyole weisen ein mittleres Molekulargewicht von 1000 bis 4000 auf und werden hergestellt aus Polyolen und einer Säurekomponente, die zu 60 bis 100 Gew.% aus einer Dimerfettsäure besteht. Diese Reaktion zwischen dem

Polyesterpolyol und ggf. anderen OH-Komponenten und dem Diisocyanat wird ggf. durch Zusatz von einem multifunktionellen Alkohol, z.B. Aminoalkohol oder Triol, zum gewünschten Zeitpunkt beendet. Im Fall der wäßrigen Beschichtungsmassen wird außerdem zur Erzielung der Wasserdispergierbarkeit ein Teil der Isocyanatgruppen mit Verbindungen umgesetzt, die eine Säuregruppe und in α-Stellung mindestens 2 gegenüber Isocyanatgruppen reaktive Gruppen besitzen. Anschließend erfolgt Neutralisation der Säuregruppen mit einem Amin.

Hinweise auf die Eignung dieser Beschichtungssysteme als Metallic-Basislack in dem 2-Schicht-"Naß-in-Naß"-Verfahren finden sich in dieser Schrift ebensowenig wie Hinweise auf die speziellen Erfordernisse an Polyurethan-Bindemittel für dieses Verfahren.

Der Erfindung lag somit die Aufgabe zugrunde, ein Verfahren zur Herstellung von mehrschichtigen, schützenden und/oder dekorativen Überzügen auf Substratoberflächen zur Verfügung zu stellen, bei dem Überzüge mit hoher Belastbarkeit im Schwitzwasserkonstantklima (SKK) nach DIN 50017 (Ausgabe Oktober 1982) erhalten werden. Weiterhin sollen auch nach längerfristiger Lagerung des Basislackes Überzüge mit guten Eigenschaften erhalten werden. So sollte insbesondere bei Metallic-Basislacken für das "Naß-in-Naß"-Verfahren auch nach längerfristiger Lagerung ein stabiler metallischer Effekt (Effektstabilität) erzielbar sein. Das Verfahren sollte außerdem eine problemlose Verarbeitbarkeit des Basislackes in den zur Anwendung kommenden Applikationsgeräten gewährleisten. Schließlich sollten auch alle weiteren, oben dargelegten Forderungen erfüllt werden.

Eine weitere Aufgabe bestand in der Bereitstellung von wäßrigen Dispersionen, die als Beschichtungszusammensetzung in dem oben genannten Verfahren zur Herstellung von mehrschichtigen, schützenden und/oder dekorativen Überzügen einsetzbar sind und alle oben dargelegten Forderungen, wie Effektstabilität nach Lagerung im Falle von Metallic-Basislacken, hohe Belastbarkeit im SKK nach DIN 50017 (Ausgabe Oktober 1982) und problemlose Verarbeitbarkeit in den zur Anwendung kommenden Applikationsgeräten, erfüllen.

Erfindungsgemäß wird diese Aufgabe gelöst durch ein Verfahren zur Herstellung eines mehrschichtigen, schützenden und/oder dekorativen Überzuges auf einer Substratoberfläche, bei welchem

(1) als Basisbeschichtungszusammensetzung eine wäßrige Dispersion aufgebracht wird, die

(a) als filmbildendes Material mindestens ein Polyurethanharz mit einer Säurezahl von 5 bis 70 mg KOH/g, welches herstellbar ist, indem aus

(A) einer Mischung aus linearen Polyetherdiolen und Polyesterdiolen,

(B) Diisocyanaten,

(C) verbindungen, die zwei gegenüber Isocyanatruppen reaktive Gruppen enthalten, wobei zumindest ein Teil der als Komponente (C) eingeetzten Verbindungen mindestens eine zur Anionenbildung befähigte Gruppe aufweist, die vorzugsweise vor der Umsetzung neutralisiert worden ist, ein endständige Isocyanatgruppen aufweisendes Zwischenprodukt (Z) hergestellt worden ist, dessen freie Isocyanatgruppen anschließend mit

(D) mindestens drei Hydroxylgruppen enthaltenden Polyolen, vorzugsweise Triolen, umgesetzt worden sind und das so gewonnene Reaktionsprodukt in eine wäßrige Phase überführt worden ist,

(b) Pigmente und

(c) weitere übliche Hilfsstoffe enthält,

(2) aus der in Stufe (1) aufgebrachten Zusammensetzung ein Polymerfilm auf der Oberfläche gebildet wird,

(3) auf der so erhaltenen Basisschicht eine geeignete transparente Deckschichtzusammensetzung aufgebracht und anschließend

(4) die Basisschicht zusammen mit der Deckschicht eingebrannt wird, dadurch gekennzeichnet, daß

I) als Komponente (A) eine Mischung aus 10 bis 90 mol% linearen Polyetherdiolen (A1) mit einem Molekulargewicht (Zahlenmittel) von 400 bis 2000 und 90 bis 10 mol% Polyesterdiolen (A2) mit einem Molekulargewicht (Zahlenmittel) von 400 bis 2000 eingesetzt wird, wobei die Summe aus (A1) und (A2) jeweils 100 mol% ergibt und wobei das Polyesterdiol (A2) hergestellt worden ist aus

a) einem Diol und

b) einer Säurekomponente, die zu 60 bis 100 Gew.%, bevorzugt 100 Gew.%, bezogen auf die Säurekomponente, aus einer oder mehreren aliphatischen und/oder cycloaliphatischen Dicarbonsäuren mit mehr als 18 C-Atomen im Molekül und zu 40 bis 0 Gew.% aus einer oder mehreren Dicarbonsäuren mit 2 bis 18 C-Atomen im Molekül, besteht;

II) die Men en der Komponenten (A), (B) und (C) so gewählt werden, daß das Äquivalentverhältnis der NCO-Gruppen zu der Summe der OH-Gruppen der Komponente (A) und der reaktiven Gruppen der Komponente (C) 2:1 bis 1,05:1, bevorzugt 1,5:1 bis 1,1:1, beträgt und

III) die Menge der Komponente (D) so gewählt wird, daß das Äquivalentverhältnis der OH-Gruppen

der Komponente (D) zu den NCO-Gruppen des Zwischenproduktes (Z) 0,5:1 bis 4:1, bevorzugt 0,75:1 bis 3,5:1, beträgt.

Die erfindungsgemäß eingesetzten Dispersionen werden bevorzugt erhalten, indem die Komponenten (A), (B) und (C) zu einem endständige Isocyanatgruppen aufweisenden Zwischenprodukt umgesetzt werden. Die Umsetzung der Komponenten (A), (B) und (C) erfolgt nach den gut bekannten Verfahren der Polyurethanchemie (vgl. z.B. Kunststoff-Handbuch, Band 7: Polyurethane, hrsg. von Dr. G.Oertel, Carl Hanser Verlag München-Wien 983), wobei bevorzugt eine stufenweise Umsetzung der Komponenten (z.B. Bil.dung eines ersten Zwischenproduktes aus den Komponenten (A und (B), das dann mit (C) zu einem zweiten Zwischenprodukt umgesetzt wird) durchgeführt wird. Es ist aber auch eine gleichzeitige Umsetzung der Komponenten (A), (B) und (C) möglich.

Die Umsetzung kann lösungsmittelfrei durchgeführt werden, bevorzugt wird sie aber in Lösungsmitteln durchgeführt, die gegenüber Isocyanatgruppen inert und mit Wasser mischbar sind. Vorteilhaft werden Lösungsmittel eingesetzt, die neben den oben beschriebenen Eigenschaften auch noch gute Löser für die hergestellten Polyurethane sind und sich aus wäßrigen Mischungen leicht abtrennen lassen. Besonders gut geeignete Lösungsmittel sind Aceton und Methylethylketon.

Als Komponente (A) wird eine Mischung aus 10 bis 90 mol%, bevorzugt 20 bis 80 mol% und ganz besonders bevorzugt 25 bis 70 mol%, jeweils bezogen auf die Gesamtmolzahl der Komponen te (A), eines linearen Polyetherdiols (Komponente (A1)) und 90 bis 10 mol%. bevorzugt 80 bis 20 mol% und ganz besonders bevorzugt 75 bis 30 mol%, bezogen auf die Gesamtmolzahl der Komponente (A) eines linearen Polyesterdiols (Komponente (A2)) eingesetzt, wobei die Summe aus den Komponenten (A1) und (A2) stets 100 mol% ergibt.

Als Komponent (A1) werden Polyether der allgemeinen Formel

$$H\left[O-(CHR)_n\right]_m OH$$

eingesetzt, in der R = Wasserstoff oder ein niedriger Alkylrest, ggf. mit verschiedenen Substituenten, ist, n = 2 bis 6 und m = 10 bis 50 oder noch höher ist. Beispiele sind Poly(oxytetramethylen)glykole, Poly-(oxyethylen)glykole und Poly(oxypropylen) glykole. Die eingesetzten linearen Polyetherdiole weisen mittlere Molekulargewichte (Zahlenmittel) im Bereich von 400 bis 2000 auf.

Die bevorzugten Polyalkylenetherpolyole sind Poly(oxytetramethylen)glykole.

Die als Komponente (A2) eingesetzten Polyesterdiole weisen ebenfalls Molekulargewichte (Zahlenmittel) im Bereich von 400 bis 2000 auf und sind herstellbar durch Veresterung einer Säurekomponente mit Diolen.

Die zur Herstellung der Polyester verwendeten Diole schließen Alkylenglykole wie Ethylenglykol, Butylenglykol, Neopentylglykol und anderen Glykole wie Dimethylolcyclohexan und 3,3′-Dihydroxymethylheptan ein.

Die Säurekomponente des Polyesters besteht zu mindestens 60 Gew.%, bevorzugt zu 100 Gew.%, aus einer oder mehreren langkettigen, aliphatischen und/oder cycloaliphatischen Dicarbonsäuren mit mehr als 18 Kohlenstoffatomen im Molekül. Die restlichen 0 bis 40 Gew.% der Säurekomponente bestehen aus einer oder mehreren Dicarbonsäuren oder ihren Anhydriden mit 2 bis 18 Kohlenstoffatomen im Molekül.

Geeignete Säuren mit 2 bis 18 C-Atomen sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure, Glutarsäure, Hexachlorheptandicarbonsäure und Tetrachlorphthalsäure. Anstelle dieser Säuren können auch ihre Anhydride, soweit diese existieren, verwendet werden.

Als langkettige,, aliphatische oder cycloaliphatische Dicarbonsäure können prinzipiell alle Dicarbonsäuren mit mehr als 18 C-Atomen im Molekül eingesetzt werden. Ganz besonders bevorzugt werden jedoch die unter dem Begriff "Dimerfettsäure" bekannten 36 C-Dicarbonsäuren eingesetzt.

Herstellverfahren für diese Dimerfettsäuren sind bekannt und beispielsweise in den Patentschriften US-2,482,761, US-2,793,220, US-2,793,221 und US-2,955,121 beschrieben. Bei diesen Verfahren werden Fettsäuren mit 18 C-Atomen, wie beispielsweise Linolen-, Linol- oder Ölsäure, einzeln, im Gemisch oder im Gemisch mit gesättigten Fettsäuren polymerisiert. Es entsteht ein Gemisch, das je nach Reaktionsführung hauptsächlich trimere (60-70%), aber auch monomere und trimere Moleküle sowie einen gewissen Anteil von Nebenprodukten enthält und das beispielsweise destillativ gereinigt werden kann. Handelsübliche

technische Dimerfettsäuren enthalten i.a. mindestens 80 Gew.% Dimerfettsäure sowie bis max. 20 Gew.% Trimere und bis zu max. 1 Gew.% Monomere. Erfindungsgemäß ganz besonders bevorzugt eingesetzt wird aber eine handelsübliche Dimerfettsäure mit einem Dimerengehalt von mindesten 98 Gew.%, einem Trimerengehalt von höchstens 2 Gew.% und höchstens Spuren von Monomeren.

Als Komponente (B) können für die Herstellung der Polyurethandispersion beliebige organische Diisocyanate eingesetzt werden. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4′-Bi-phenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, Bis-(4-isocyanatophenyl)-methan, 4,4′-Diisocyanatodiphenylether und 2,3-Bis-(8-isocyanatooctyl)-4-octyl-5-hexyl-cyclohexen.

Als Komponente (C) werden Verbindungen eingesetzt, die zwei gegenüber Isocyanatgruppen reaktive Gruppen enthalten, wobei zumindest ein Teil der als Komponente (C) eingesetzten Verbindungen mindestens eine zur Anionenbildung befähigte Gruppe aufweist, die vorzugsweise vor der Umsetzung neutralisiert worden ist.

Durch Einstellung eines bestimmten Mischungsverhältnisses zwischen den zur Anionenbildung befähigten Gruppen enthaltenden und den von diesen Gruppen freien Verbindungen kann der Anteil an organischen Gruppen im Polyurethanmolekül gesteuert werden und so gewährleisten werden, daß das aus den Komponenten (A) bis (D) aufgebaute Polyurethanharz eine Säurezahl von 5 bis 70 mg KOH/g aufweist.

Geeignete mit Isocyanatgruppen reagierende Gruppen sind insbesondere Hydroxylgruppen. Die Verwendung von Verbindungen, die primäre oder sekundäre Aminogruppen enthalten, kann einen negativen Einfluß auf die oben beschriebene Verarbeitbarkeit der Dispersionen haben. Art und Menge von ggf. einzusetzenden aminogruppenhaltigen Verbindungen sind vom Durchschnittsfachmann durch einfach durchzuführende Routineuntersuchungen zu ermitteln.

Als zur Anionenbildung befähigte Gruppen kommen vor allem Carboxyl- und Sulfonsäuregruppen in Betracht. Diese Gruppen können vor der Umsetzung neutralisiert werden, um eine Reaktion mit den Isocyanatgruppen zu vermeiden.

Als Verbindung, die mindestens zwei mit Isocyanatgruppen reagierende Gruppen und mindestens eine zur Anionenbildung befähigte Gruppe enthält, sind beispielsweise Dihydroxypropionsäure, Dimethylolpropionsäure, Dihydroxybernsteinsäure oder Dihydroxybenzoesäure geeignet. Geeignet sind auch die durch Oxidation von Monosacchariden zugänglichen Polyhydroxysäuren, z.B. Glukonsäure Zuckersäure, Schleimsäure, Glukuronsäure und dergleichen. Bevorzugt wird Dimethylolpropionsäure eingesetzt.

Aminogruppenhaltige Verbindungen sind beispielsweise $\alpha,\delta$-Diaminovaleriansäure, 3,4-Diaminobenzoesäure, 2,4-Diamino-toluol-sulfonsäure-(5), 4,4′-Diamino-di-phenylethersulfonsäure und dergleichen.

Für die Neutralisation der anionischen Gruppen werden bevorzugt tertiäre Amine eingesetzt, wie beispielsweise Trimethylamin, Triethylamin, Dimethylanilin, Diethylanilin, Triphenylamin und dergleichen. Die Neutralisation kann aber auch mit anderen bekannten organischen und anorganischen Basen wie z.B. Natrium- und Kaliumhydroxid und Ammoniak durchgeführt werden.

Als Verbindungen, die zwei gegenüber Isocyanatgruppen reaktive Gruppen aufweisen, jedoch frei von zur Anionenbildung befähigten Gruppen sind, können beispielsweise niedermolekulare Diole oder Diamine mit primären oder sekundären Aminogruppen eingesetzt werden.

Die Mengen der Komponenten (A), (B) und (C) werden so gewählt, daß das Äquivalentverhältnis der Isocyanatgruppen zu der Summe der OH-Gruppen der Komponente (A) und der reaktiven Gruppen der Komponente (C) 2:1 bis 1,05:1, bevorzugt 1,5:1 bis 1,1:1, beträgt.

Die Umsetzung des aus (A), (B) und (C) gebildeten isocyanatgruppenhaltigen Zwischenproduktes (Z) mit einem mindestens drei Hydroxylgruppen enthaltenden Polyol (D), vorzugsweise Triol, wird vorzugsweise durch die Stöchiometrie der eingesetzten Verbindungen so gesteuert, daß es zu Kettenverlängerungen und ggf. auch zu Verzweigungen der Bindemittelmoleküle kommt. Bei dieser Umsetzung muß sorgfältig darauf geachtet werden, daß keine vernetzten Produkte erhalten werden (vgl. z.B. US-PS-4,423,179), d.h. daß das Molekulargewicht des aus den Komponenten (A) bis (D) aufgebauten Polyurethanharzes nicht über 40.000 (Zahlenmittel) liegt. Andererseits sollte das Molekulargewicht auch nicht niedriger als 1.500 (Zahlenmittel) sein.

Im Prinzip sind alle mindestens drei Hydroxylgruppen enthaltenden Polyolen, die mit dem aus (A), (B) und (C) erhaltenen Zwischenprodukt so umgesetzt werden können, daß keine vernetzten Produkte entstehen, zur Herstellung der erfindungsgemäßen Polyurethandispersion geeignet. Als Beispiele seien Trimethylolpropan, Glycerin, Erythrit, Mesoerythrit, Arabit, Adonit, Xylit, Mannit, Sorbit, Dulcit, Hexantriol, (Poly)-Pentaerythritol usw. genannt.

Ganz besonders gute Ergebnisse können erzielt werden, wenn Trimethylolpropan als Polyol eingesetzt wird.

Die Menge der Komponente (D) wird so gewählt, daß das Äquivalentverhältnis der OH-Gruppen der Komponente (D) zu den Isocyanatgruppen des Zwischen produktes (Z) 0,5:1 bis 4:1, bevorzugt 0,75:1 bis 3,5:1, beträgt. Weiterhin ist bei der Auswahl der Menge der Komponente (D) das Molekulargewicht des Zwischenproduktes (Z) und das gewünschte Molekulargewicht des Polyurethanharzes zu berücksichtigen. Ist nämlich das Molekulargewicht des Zwischenproduktes niedrig und eine deutliche Molekulargewichtsvergrößerung erwünscht, so ist bekanntermaßen die eingesetzte Menge der Komponente (D) niedriger als im Fall eines hohen Molekulargewichts des Zwischenproduktes, bei dem die Komponente (D) hauptsächlich zum Abfangen der freien Isocyanatgruppen und somit zum Abbruch der Reaktion dient.

Außer dem beschriebenen, bevorzugten stufenweisen Aufbau des Polyurethanharzes aus den Kom onenten (A), (B), (C) und (D) ist auch eine gleichzeitige Umsetzung aller vier Komponenten (A), (B), (C) nd (D) möglich, wobei allerdings sorgsam darauf geachtet werden muß, daß unvernetzte Polyurethane erhalten werden.

Analog zum stufenweisen Aufbau ist auch bei der gleichzeitigen Umsetzung der Komponenten (A), (B), (C) und (D) die Menge der einzelnen Komponenten (A), (B), (C) und (D) so zu wählen, daß das entstehende Polyurethanharz ein Molekulargewicht von 1.500 bis 40.000 (Zahlenmittel) und eine Säurezahl von 5 bis 70 mg KOH/g aufweist. In der Regel werden die Mengen der Komponenten (A), (B), (C) und (D) so gewählt, daß das Äquivalentverhältnis der NCO-Gruppen der Komponente (B) zu der Summe der gegenüber NCO-Gruppen reaktiven Gruppen der Komponenten (A,, (C) und (D) 2:1 bis 1:2, bevorzugt 1,5:1 bis 1:1,5, beträgt.

Das so gewonnene Reaktionsprodukt kann noch freie Isocyanatgruppen aufweisen, die bei der anschließenden Dispergierung des Reaktionsproduktes in Wasser hydrolysiert werden.

Nach der Umsetzung des aus (A). (B) und (C) erhaltenen Zwischenproduktes mit der Polyolkomponente, die vorzugsweise in einem gegenüber Isocyanatgruppen inerten, mit Wasser mischbaren, das entstehende Polyurethan gut lösenden und aus wäßrigen Mischungen gut abtrennbaren Lösungsmitteln (z.B. Aceton oder Methylethylketon) durchgeführt worden ist und nach der ggf. noch durchzuführenden Neutralisierung der zur Anionenbildung befähigten Gruppen wird bzw. im Fall der einstufigen Reaktion nach dieser einstufigen Aufbaureaktion das Reaktionsprodukt in eine wäßrige Phase überführt. Das kann z.B. durch Dispergierung des Reaktionsgemisches in Wasser und Abdestillieren der unter 100 °C siedenden organischen Lösungsmittelanteile geschehen.

Unter wäßriger Phase ist Wasser, das auch noch organische Lösungsmittel enthalten kann, zu verstehen. Als Beispiel für Lösungsmittel, die im Wasser vorhanden sein können, seien heterocyclische, aliphatische oder aromatische Kohlenwasserstoffe, ein- der mehrwertige Alkohole, Ether, Ester und Ketone, wie z.B N-Methylpyrrolidon, Toluol, Xylol, Butanol, Ethyl- und Butylglykol sowie deren Acetate, Butyldiglycol, Ethylenglykoldibutylether, Ethylenglykoldiethylether, Diethylenglykoldimethylether, Cyclohexanon, Methylethylketon, Aceton, Isophoron oder Mischungen davon genannt.

Nachdem der pH-Wert der resultierenden Polyurethandispersion kontrolliert und ggf. auf einen Wert zwischen 6 und 9 eingestellt worden ist, bildet die Dispersion die Grundlage der erfindungsgemäß eingesetzten Überzugsmittel, in die die übrigen Bestandteile wie z.B. zusätzliche Bindemittel, Pigmente, organische Lösungsmittel und Hilfsstoffe durch Dispergieren beispielsweise mittels eines Rührers oder Dissolvers homogen eingearbeitet werden. Abschließend wird erneut der pH-Wert kontrolliert und ggf. auf einen Wert von 6 bis 9, vorzugsweise 7,0 bis 8,5 eingestellt. Weiterhin werden der Festkörpergehalt und die Viskosität auf die an die jeweiligen Applikationsbedingungen angepaßten Werte eingestellt.

Die gebrauchsfertigen Überzugsmittel weisen in der Regel einen Festkörperanteil von 10 bis 30 Gew.% auf, und ihre Auslaufzeit im ISO-Becher 4 beträgt 15 bis 30 Sekunden, vorzugsweise 18 bis 25 Sekunden. Ihr Anteil an Wasser beträgt 60 bis 90 Gew.%, der an organischen Lösungsmitteln 0 bis 20 Gew.%, jeweils bezogen auf das gesamte Überzugsmittel.

Die vorteilhaften Wirkungen der erfindungsgemäß eingesetzten Beschichtungszusammensetzungen sind auf den Einsatz der oben beschriebenen wäßrigen Polyurethandispersion zurückzuführen.

In vielen Fällen ist es wünschenswert, die Eigenschaften der erhaltenen Überzüge durch Mitverwendung weiterer Bindemittelsysteme in der Basisbeschichtungszusammensetzung gezielt zu verbessern.

Die erfindungsgemäß eingesetzten Basisbeschichtungszusammensetzungen enthalten vorteilhaft als zusätliche Bindemittelkomponente ein wasserverdünnbares Melaminharz in einem Anteil von 1 bis 80 Gew.%, bevorzugt 20 bis 60 Gew.%, bezogen auf den Festkörpergehalt der Polyurethandispersion.

Wasserlösliche Melaminharze sind an sich bekannt und werden in größerem Umfang eingesetzt. Es handelt sich hierbei um veretherte Melamin-Formaldehyd-Kondensationsprodukte. Ihre Wasserlöslichkeit

hängt abgesehen vom Kondensationsgrad, der möglichst niedrig sein soll, von der Veretherungskomponente ab, wobei nur die niedrigsten Glieder der Alkanol- bzw. Ethylenglykolmonoetherreihe wasserlösliche Kondensate ergeben. Die größte Bedeutung haben die Hexamethoxymethylmelaminharze. Bei Verwendung von Lösungsvermittlern können auch butanolveretherte Melaminharze in wäßriger Phase dispergiert werden.

Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppe nach Neutralisation wasserlöslich und können als Vernetzerkomponente in den erfindungsgemäß eingesetzten Überzugsmitteln eingesetzt werden.

Anstelle der beschriebenen Melaminharze können auch andere wasserlösliche oder wasserdispergierbare Aminoharze, wie z.B. Benzoguanaminharze, eingesetzt werden.

Für den Fall, daß die erfindungsgemäß eingesetzte Basisbeschichtungszusammensetzung ein Melaminharz enthält, kann sie vorteilhaft zusätzlich als weitere Bindemittelkomponente ein wasserverdünnbares Polyesterharz und/oder ein wasserverdünnbares Polyacrylatharz enthalten, wobei das Gewichtsverhältnis Melaminharz:Polyester-/Polyacrylatharz 2:1 bis 1:4 beträgt und der Gesamtanteil an Melaminharz, Polyester-/Polyacrylatharz, bezogen auf den Festkörpergehalt der Polyurethandispersion, 1 bis 80 Gew.%, bevorzugt 20 bis 60 Gew.%, beträgt.

Wasserverdünnbare Polyester sind solche mit freien Carboxylgruppen, d.h. Polyester mit hoher Säurezahl.

Es sind grundsatzlich zwei Methoden bekannt, die benötigten Carboxylgruppen in das Harzsystemm einzufügen. Der erste Weg besteht darin, die Veresterung bei der gewünschten Säurezahl abzubrechen. Nach Neutralisation mit Basen sind die so erhaltenen Polyester in Wasser löslich und verfilmen beim Einbrennen. Die zweite Möglichkeit besteht in der Bildung partieller Ester von Di- oder Polycarbonsäuren mit hydroxylreichen Polyester mit niedriger Säurezahl. Für diese Reaktion werden üblicherweise Anhydride der Dicarbonsäuren herangezogen, welche unter milden Bedingungen unter Ausbildung einer freien Carboxylgruppe mit der Hydroxylkomponente umgesetzt werden.

Die wasserverdünnbaren Polyacrylatharze enthalten ebenso wie die oben beschriebenen Polyesterharze freie Carboxylgruppen. Es handelt sich in der Regel um Acryl- bzw. Methacrylcopolymerisate, bevorzugt mit einem Molekulargewicht (Zahlenmittel) von 2000 bis 8000, und die Carboxylgruppen stammen aus den Anteilen an Acryl- oder Methacrylsäure.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis 300 °C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis 15 C-Atome enthalten. Beispiele von geeigneten Diisocyanaten sind die oben genannten Diisocyanate (Komponente B).

Es können auch Polyisocyanate von höherer Isocyanatfunktionalität verwendet werden. Beispiele dafür sind Tris-(4-isocyanatophenyl)-methan, 1,3,5-Triisocyanatobenzol, 2,4,6-Triisocyanatotoluol, 1,3,5-Tris-(6-isocyanatohexyl)-biuret, Bis-(2,5-diisocyanato-4-methylphenyl)-Methan und polymere Polyisocyanate, wie Dimere und Trimere von Diisocyanatotoluol. Ferner kann man auch Mischungen von Polyisocyanaten benutzen.

Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten. Dazu erden bekanntlich Polyole mit einem Überschuß von Polyisocyanaten umgesetzt, wodurch Präpolymere mit end ständigen Isocyanatgruppen entstehen. Beispiele von Polyolen, die hier für verwendet werden können, sind einfache Polyole, wie Glykole, z.B. Ethylenglykol und Propylenglykol, und andere Polyole, wie Glycerin, Trimethylolpropan, Hexantriol und Pentaerythrit; ferner Monoether, wie Diethylenglykol und Dipropylenglykol sowie Polyether, die Addukte aus solchen Polyo en und Alkylenoxiden sind. Beispiele von Alkylenoxiden, die sich für eine Polyaddition an diese Polyole unter Bildung von Polyethern eignen, sind Ethylenoxid, Propylenoxid, Butylenoxid und Styroloxid. Man bezeichnet diese Polyadditionsprodukte im allgemeinen als Polyether mit endständigen Hydroxylgruppen. Sie können linear oder verzweigt sein. Beispiele von solchen Polyethern sind Polyoxyethylenglykol von einem Molekulargewicht von 1540, Polyoxypropylenglykol mit einem Molekulargewicht von 1025, Polyoxytetramethylenglykol, Polyoxyhexamethylenglykol, Polyoxynonamethylenglykol, Polyoxydecamethylenglykol, Polyoxydodecanmethylenglykol und Mischungen davon. Andere Typen von Polyoxyalkylenglyxolethern können ebenfalls verwendet werden. Besonders geeignete Polyetherpolyole sind diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerintrime hylolethan, Trimethylolpropan, 1,2,6-Hexantriol, Dipentaerythrit, Tripentaerythrit, Polypentaerythrit, Methylglukosiden und Saccharose mit Alkylenoxiden, wie Ethylenoxid, Propylenoxid oder Mischungen davon.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl , Amyl-, Hexyl-, Heptyl-, Octyl-, Nonyl-, 3,3,5-Trimethylhexyl-, Decyl- und Laurylalkohol; aromatische Alkylalkohole, wie Phenylcarbinol und Methylphenylcarbinol. Es können auch geringe Anteile an höhermolekularen und rela tiv schwer flüchtigen Monoalkoholen ggf. mitverwendet werden, wobei diese Alkohole nach ihrer Abspaltung als Weichmacher in den Überzügen wirken.

Andere geeignete Blockierungsmittel sind Oxime, wie Methylethylketonoxim, Acetonoxim und Cyclohexanonoxim, sowie auch Caprolactame, Phenole und Hydroxamsäureester. Bevorzugte Blockierungsmittel sind Malonester, Acetessigester und β-Di-ketone.

Die blockierten Polyisocyanate werden hergestellt, indem man eine ausreichende Menge eines Alkohols mit dem organischen Polyisocyanat umsetzt, so daß keine freien Isocyanatgruppen mehr vorhanden sind.

Außerdem entnalten die erfindungsgemäß eingesetzten Basisbeschichtungszusammensetzungen bekannte und in der Lackindustrie übliche nichtmetallische Pigmente bzw. Farbstoffe und/oder metallische Pigmente. Besonders bevorzugt werden metallische Pigmente allein oder in Kombination mit nichtmetallischen Pigmenten eingesetzt.

Geeignete Metallpigmente sind Metallpulver einzeln oder im Gemisch, wie Kupfer, Kupferlegierungen, Aluminium und Stahl, vorzugsweise luminiumpulver Als metallische Pigmente werden solche handelsüblichen Metallpulver bevorzugt, die für wäßrige Systeme speziell vorbehandelt sind.

Die metallischen Pigmente werden in einer Menge von 0 bis 40 Gew.%, bevorzugt 0,5 bis 25 Gew.%, bezogen auf den gesamten Festkörpergehalt der Überzugsmittel an Bindemitteln, eingesetzt. Werden die Metallpulver zusammen mit einem oder mehreren nichtmetallischen Pigmenten bzw. Farbstoffen eingesetzt, so wird der Anteil der nichtmetallischen Pigmente so gewählt, daß der gewünschte Metallic-Effekt nicht unterdrückt wird und daß der Anteil der metallischen Pigmente überwiegt.

Geeignete nichtmetallische Farbstoffe oder Pigmente können anorganischer oder organischer Natur sein. Beispiele sind Titandioxid, Graphit, Ruß, Zinkchromat, Strontiumchromat, Bariumchromat, Bleichromat, Bleicyanamid. Bleisilicochromat, Zinkoxid, Cadmiumsulfid, Chromoxid, Zinksulfid, Nickeltitangelb, Chromtitangelb, Eisenoxidrot, Eisenoxidschwarz, Ultramarinblau, Phthalocyaninkomplexe, Naphtholrot, Chinacridone, halogenierte Thioindigopigmente oder dergleichen.

Sie werden in üblichen Mengen, bevorzugt in einer Menge von 0 bis 20 Gew.%, bezogen auf die Gesamtrezeptur, eingesetzt.

Die erfindungsgemäß eingesetzten Beschichtungszusammensetzungen können auch organische Lösungsmittel in üblichen Mengen, bevorzugt 0 bis 50 Gew.%, bezogen auf die Gesamtrezeptur, Füllstoffe in üblichen Mengen, bevorzugt 0 bis 10 Gew.%, bezogen auf die Gesamtrezeptur, sowie weitere übliche Zusätze wie Weichmacher, Stabilisatoren, Netzmittel, Dispergierhilfsmittel, Verlaufmittel, Entschäumer und Katalysatoren einzeln oder im Gemisch in den üblichen Mengen, bevorzugt jeweils 0 bis 5 Gew.%, bezogen auf die Gesamtrezeptur, enthalten. Diese Substanzen können den Einzelkomponenten und/oder der Gesamtmischung zugesetzt werden.

Geeignete Füllstoffe sind z.B. Talkum, Glimmer, Kaolin, Kreide, Quarzmehl, Asbestmehl, Schiefermehl, Bariumsulfat, verschiedene Kieselsäuren, Silikate, Glasfasern, organische Fasern und dergleichen.

Die oben beschriebenen Beschichtungszusammensetzungen werden erfindungsgemäß in Verfahren zur Herstellung von mehrschichtigen Überzügen auf Substratoberflächen verwendet, bei welchen

(1) als Basisbeschichtungszusammensetzung eine wäßrige Dispersion aufgebracht wird,

(2) aus der in Stufe (1) aufgebrachten Zusammensetzung ein Polymerfilm auf der Substratoberfläche gebildet wird,

(3) auf der so erhaltenen Basisschicht eine geeignete transparente Deckschichtzusammensetzung aufgebracht und anschließend

(4) die Basisschicht zusammen mit der Deckschicht eingebrannt wird.

Als Deckschichtzusammensetzungen sind grundsätzlich alle bekannten nicht oder nur transparent pigmentierten Überzugsmittel geeignet. Hierbei kann es sich um konventionelle lösungsmittelhaltige Klarlakke wasserverdünnbare Klarlacke oder Pulverklarlacke handeln.

Als zu beschichtende Substrate kommen vor allem vorbehandelte Metallsubstrate in Frage; es können aber auch nicht vorbehandelte Metalle und beliebige andere Substrate wie z.B. Holz, Kunststoffe usw. unter Verwendung der erfindungsgemäßen Basisbeschichtungszusammensetzungen mit einer mehrschichtigen schützenden und/oder dekorativen Beschichtung überzogen werden.

Die erfindungsgemäß eingesetzten Basisbeschichtungszusammensetzungen können in den zur Anwendung kommenden Applikationsgeräten roblemlos verarbeitet werden und führen, auch nach längerfristiger Lagerung vor der Applikation, zu Beschichtungen mit sehr guten technischen Eigenschaften. Sie sind besonders geeignet als Metallic-Basislack für das "Naß-in-Naß"-Verfahren, zeigen dort eine sehr gute Effektstabilität, und die resultierenden Beschichtungen weisen eine sehr hoher Belastbarkeit im Schwitzwasserkonstantklima nach DIN 50017 (Ausgabe Oktober 1982) auf.

Die Erfindung wird in den folgenden Beispielen näher erläutert. Alle Angaben über Teile und Prozentsätze sind Gewichtsangaben, falls nicht ausdrücklich etwas anderes festgestellt wird.

Herstellung eines wasserlöslichen Polyesters

Der verwendete wasserlösliche Polyester wird folgendermaßen hergestellt:
In einem Reaktor, der mit einem Rührer, einem Thermometer und einer Füllkörperkolonne ausgestattet ist, werden 832 Gew.-Teile Neopentylglykol eingewogen und zum Schmelzen gebracht. Es werden 664 Gew.-Teile Isophthalsäure zugegeben. Unter Rühren wird so aufgeheizt, daß die Kolonnenkopftemperatur 100 °C nicht übersteigt. Es wird bei max. 220 °C so lange verestert, bis eine Säurezahl von 8,5 erreicht ist. Nach Abkühlen auf 180 °C werden 384 Gew.-Teile Trimellithsäureanhydrid zugegeben und weiter verestert, bis eine Säurezahl von 39 erreicht ist. Es wird mit 425 Gew.-Teilen Butanol verdünnt.

Melaminharz

Es wird ein handelsübliches, niedrigmolekulares, mit Methanol hochverethertes Melamin-Formaldehydharz mit einem Festkörpergehalt von 70 Gew.% in Wasser eingesetzt.

Aluminiumpigmentpaste

Handelsübliche Aluminiumpigmentpaste, 65%ig in Wasser, durchschnittlicher Teilchendurchmesser 10µm.

Klarlack

Es wurde ein für die Autoreparaturlackierung geeigneter, handelsüblicher 2-Komponenten-Klarlack auf Basis Polyacrylat/Polyisocyanat eingesetzt.

Beispiel 1

490 Gew.-Teile eines Kondensationsproduktes (Säurezahl 2 mg KOH/g, Molekulargewicht = 784) aus 1 mol einer polymeren technischen Fettsäure (Dimerengehalt mindestens 98 Gew.%, Trimerengehalt höchstens 2 Gew.%, Monomerenanteil höchstens Spuren) und 2 mol Hexandiol-1,6, 490 Gew.-Teile Polytetrahydrofuran (Molekulargewicht = 1000) und 88,2 Gew.-Teile Dimethylolpropionsäure werden in einem temperierbaren, mit Rührer und Wasserabscheider versehenen Reaktionsgefäß unter Vakuum (ca. 20 mbar) 1/2 Stunde bei 80 °C entwässert. Dann werden 550,2 Gew.-Teile 4,4′-Diisocyanatodicyclohexylmethan, 650 Gew.-Teile Methylethylketon und 1 Gew.-Teil Dibutylzinndilaurat nacheinander unter Rühren zugegeben, und es wird unter Stickstoff als Schutzgas auf 80 °C aufgeheizt.

Nachdem ein NCO-Gehalt von 1,50 %, bezogen auf die Gesamtzusammensetzung, erreicht ist, werden 39,3 Gew.-Teile Trimethylolpropan bei 80 °C zugegeben und die Reaktion bei 80 °C fortgesetzt, is eine Viskosität von 6,3 dPas (Probe verdünnt 1:1 mit N-Methylpyrrolidon) erreicht ist. Dann wird abgekühlt und langsam eine Mischung von 50,3 Gew.-Teilen Dimethylethanol-min und 3796 Gew.-Teilen deionisiertem Wasser zulaufen gelassen. Das Methyl.ethylketon wird anschließend im Vakuum abdestilliert und mit 1201 Gew.-Teilen deionisiertem Wasser auf einen nichtflüchtigen Anteil von 25 % eingestellt. Man erhält eine milchige Polyurethandispersion 1 mit einem pH-Wert von 8,2 und einer Säurezahl des Polyurethanharzes von 25 mg KOH/g.

25 Gew.-Teile eines Verdickungsmittels (Paste eines Natrium-Magnesium-Silikats mit Schichtstruktur, 3%ig in Wasser) werden unter Rühren mit 24 Gew.-Teilen der Polyurethandispersion 1 versetzt. Unter

weiterem Rühren werden 5 Gew.Teile des Polyesterharzes, 0,5 Gew.-Teile Dimethylethanolamin (10%ig in Wasser), 2 Gew.-Teile Melaminharz, 5 Gew.Teile Aluminiumpigmentpaste, 5 Gew.-Teile Butylglykol und 27,5 Gew.-Teile Wasser zugegeben. Nachdem 30 Minuten gerührt worden ist, wird mit Wasser eine Auslaufzeit von 14 bis 15 s (gemessen im DIN 4-Becher bei 23 °C) eingestellt.

Das erhaltene Überzugsmittel 1 wird auf ein phosphatiertes Stahlblech aurgespritzt. Nach einer Ablüftzeit von 15 min bei Raumtemperatur wird der Klarlack aufgebracht. Der erhaltene Zweischichtüberzug wird in einem Umluftofen 40 min bei 80 °C (Objekttemperatur) eingebrannt. Die Prüfergebnisse der resultierenden Beschichtung zeigt Tabelle 1.

Beispiel 2

Beispiel 2 wird analog Beispiel 1 durchgeführt mit dem Unterschied, daß zur Herstellung der Polyurethandispersion 305 Gew.-Teile (statt 490 Gew.-Tei.le) des Kondensationsproduktes (Säurezahl 2 mg KOH/g; Molekulargewichte 784) und 819 Gew.-Teile (statt 490 Gew.-Teile) Polytetrahydrofuran (Molekulargewicht = 1000) eingesetzt werden. Man erhält eine feinteilige Polyurethan-Dispersion 2 mit einem pH-Wert von 8,0 und einer Säurezahl von 24 mg KOH/g. Analog Beispiel 1 wird die Polyurethan-Dispersion 2 zu einem Basislack 2 verarbeitet, der analog Beispiel 1 im "Naß-in-Naß"-Verfahren appliziert wird. Die Prüfergebnisse der resultierenden Beschichtung zeigt Tabelle 1.

Vergleichsbeispiel 1

698 Gew.-Teile eines Kondensationsproduktes (Molekulargewicht 1460) aus 1 mol einer polymeren technischen Fettsäure (Dimerengehalt mindestens 98 Gew.%, Trimerengehalt höchstens 2 Gew.%, Monomerenanteil höchstens Spuren), 1 mol Isophthalsäure und 2,62 mol Hexandiol, 43 Gew.-Teile Dimethylolpropionsäure, 16 Gew.-Teile Neopentylglykol, 300 Gew.-Teile Methylethylketon und 259 Gew.-Teile Isophorondiisocyanat werden in einem temperierbaren, mit Rührer und Wasserab scheider versehenen Reaktionsgefäß unter Stickstoffatmosphäre auf 80 °C erhitzt. Dann werden 0,3 Gew.-Teile Dibutylzinndilaurat zugegeben und die Reaktion bis zu einem NCOGehalt von 1,16 %, bezogen auf die Gesamtzusammensetzung, fortgeführt. Dann werden 37 Gew.-Teile Trimethylolpropan und 250 Gew.-Teile Methylethylketon zugegeben und bei 80 °C gerührt, bis kein Isocyanat mehr nachweisbar ist.

Dann wird langsam eine Mischung von 20 Gew.-Teilen Dimethylethanolamin in 2068 Gew.-Teilen deionisiertem Wasser eingerührt. Unter Vakuum wird das Methylethylketon abdestilliert. Man erhält eine feinteilige Dispersion 3 mit einem pH-Wert von 7,8, einem nichtflüchtigen Anteil von 27 % und einer Säurezahl des Polyurethans von 17 mg KOH/g.

Wie in Beispiel 1 beschrieben, wird ein Basislack 3 hergestellt. Im Unterschied zu Beispiel 1 werden statt 24 Gew.Teilen der Polyurethandispersion 1 aber 22,2 Gew.-Teile der Polyurethandispersion 3 eingesetzt.

Das erhaltene Überzugsmittel 3 wird analog Beispiel 1 nach dem "Naß-in-Naß"-Verfahren auf phosphatierte Stahlbleche appliziert und mit dem Klarlack zusammen eingebrannt. Die Prüfergebnisse der resultierenden Beschichtung zeigt Tabelle 1.

Vergleichsbeispiel 2

255 Gew.-Teile eines Polyesters aus Hexandiol-1,6 und Isophthalsäure mit einem mittleren Molekulargewicht von 614 werden zusammen mit 248 Gew.-Teilen eines Polypropylenglykols mit einem mittleren Molekulargewichte von 600 und mit 100 Gew.-Teilen Dimethylolpropionsäure auf 100 °C erhitzt und 1 Stunde im Vakuum entwässert. Bei 80 °C werden 526 Gew.Teile 4,4'-Dicyclohexylmethandiisocyanat und 480 Gew.-Teile Methylethylketon zugegeben. Es wird bei 80 °C so lange gerührt, bis der Gehalt an freien Isocyanatgruppen 1,69 %, bezogen auf die Gesamteinwaage, beträgt.

Jetzt werden 28,5 Gew.-Teile Trimethylolpropan und anschließend 0,4 Gew.-Teile Dibutylzinndilaurat zugegeben und 2 Stunden bei 80 °C weitergerührt. Nach Zugabe von 1590 Gew.Teilen Methylethylketon wird so lange bei 80 °C gehalten, bis die Viskosität, gemessen im DIN4-Becher, 65 Sekunden beträgt (Probe im Verhältnis 2:3 in N-Methylpyrrolidon gelöst).

Nach Zugabe einer Mischung aus 22,4 Gew.-Teilen Dimethylethanolamin und 2650 Gew.-Teilen deionisiertem Wasser wird im Vakuum das Methylethylketon abdestilliert, und man erhält eine feinteilige

Dispersion 4 mit einem Festkörpergehalt von 30 %, einem pH-Wert von 7,4, einer Viskosität von 48 Sekunden, gemessen im DIN4-Becher, und einer Säurezahl des Polyurethanharzes von 35 mg KOH/g.

Wie in Beispiel 1 beschrieben, wird unter Verwendung von 20 Gew.-Teilen de Polyurethandispersion 4 (statt 24 Gew.-Teilen Polyurethandispersion 1) ein Überzugsmittel 4 hergestellt und analog Beispiel 1 nach dem "Naß-in-Naß"-Verfahren auf Phosphatierte Stahlbleche appliziert und zusammen mit dem Klarlack eingebrannt. Die Prüfergebnisse der resultierenden Beschichtung zeigt Tabelle 1.

Vergleichsbeispiel 3

960 Gew.-Teile Polytetrahydrofuran (Molekulargewicht 650) und 112,5 Gew.-Teilen Dimethylolpropionsäure werden in einem temperierbaren, mit Rührer und Wasserabscheider versehenen Reaktionsgefäß unter Vakuum bei 80 °C entwässert. Dann werden 786 Gew.-Teile 4,4′-Diisocyanatodicyclohexylmethan, 500 Gew.-Teile Methylethylketon und 1 Gew.-Teil Dibutylzinndilaurat nacheinander unter Rühren zugegeben und unter Stickstoffatmosphäre auf 80 °C aufgeheizt.

Nachdem ein NCO-Gehalt von 1,98 %, bezogen auf die Gesamtzusammensetzung, erreicht ist, werden 49,6 Gew.-Teile Trimethylolpropan zugegeben und die Reaktion bei 80 °C fortgeführt, bis ein Viskosität von 170 Sekunden (gemessen im DIN 4-Becher bei 23 °C und Probe verdünnt 1:1 mit N-Methylpyrrolidon) erreicht ist. Dann wird eine Mischung von 61 Gew.-Teilen Dimethylethanolamin und 4374 Gew.-Teilen deionisiertem Wasser langsam zulaufen gelassen. Das Methylethylketon wird anschließend im Vakuum abdestilliert, und mit 1152 Gew.-Teilen deionisiertem Wasser wird auf einen nichtflüchtigen Anteil von 25 % eingestellt. Man erhält eine milchige Dispersion 5 mit einem pH-Wert von 8,4 und einer Säurezahl des Polyyurethanharzes von 25 mg KOH/g.

Wie in Beispiel 1 beschrieben, wird unter Verwendung von 24 Gew.-Teilen der Polyurethandispersion 5 ein Überzugsmittel 5 hergestellt und analog Beispiel 1 auf phosphatierte Stahlbleche appliziert und zusammen mit dem Klarlack eingebrannt. Die Prüfergebnisse der resultierenden Beschichtung zeigt Tabelle 1.

Tabelle 1: Prüfergebnisse

| | Beispiel 1 | Beispiel 2 | Vergleichsbeispiel 1 | Vergleichsbeispiel 2 | Vergleichsbeispiel 3 |
|---|---|---|---|---|---|
| Metalleffekt frisch 1) | 120 | 125 | 122 | 120 | 125 |
| nach 8 Wo. 2) | 102 | 111 | 87 | 100 | 100 |
| DOI 3) vor SKK 4) | 89 | 86 | 92 | 92 | 90 |
| nach SKK 5) | 84 | 87 | 79 | 43 | 73 |

1) Bestimmung des Metalleffektes an beschichteten Stahlblechen, wobei der Basislack direkt nach seiner Herstellung appliziert und mit dem Klarlack zusammen eingebrannt wurde, wie in den Beispielen beschrieben. Angegeben ist jeweils der Quotient aus der gemessenen Aufsichthelligkeit $R_Q$ und der Schrägsichthelligkeit $R_S$ im Goniophotometer, multipliziert mit 100.

2) Wie 1), jedoch wurde der komplette Basislack 8 Wochen bei Raumtemperatur gelagert, bevor er appliziert wurde.

3) Distinctness of Reflected Image: Bei Beleuchtung der zu beurteilenden Oberfläche unter 30° wird die direkte Reflexion im Glanzwinkel -30° und in unmittelbarer Nähe des Glanzwinkels bei -30° ± 0,3° gemessen. Der hieraus ermittelte DOI-Wert korrespondiert mit der visuell empfundenen Schärfe des Spiegelbildes eines Gegenstandes auf dieser Oberfläche. Der DOI-Wert wird auch Bildschärfewert genannt. Meßwerte: 100 bester Wert; 0

schlechtester Wert; Meßgeräte: Dorigon D47R-6F der Firma HunterLab; Beleuchtung 30°; Beobachtung -30°, -29,7°, -30,3°.

4) DOI-Meßwert der in den Beispielen beschriebenen 2-Schicht-Lackierung, jedoch mit dem Unterschied, daß analog zu 2) der Basislack vor der Applikation 8 Wochen bei Raumtemperatur gelagert wurde.

5) Wie 4), jedoch gemessen nach Belastung im Schwitzwasserkonstantklima (SKK) nach DIN 50017 (Ausgabe Oktober 1982) nach 1 Stunde Regeneration.

Die Prüfergebnisse der Tabelle 1 zeigen, daß die nach dem erfindungsgemäßen Verfahren hergestellten Stahlblechbeschichtungen eine hervorragende Belastbarkeit im Schwitzwasserkonstantklima (SKK) nach DIN 50017 (Ausgabe Oktober 1982), einen sehr guten Metalleffekt und eine sehr gute Effektstabilität aufweisen.

Werden dagegen Basislacke eingesetzt, bei denen bei der Herstellung des Polyurethanharzes als Komponente (A) nur Polyesterdiole (Säurekomponente besteht zu 50 mol% aus Dimerfettsäure) ein esetzt wurden (Vergleichsbeispiel 1), so ist die Effektstabilität bei 8wöchiger Lagerung des Basislackes völlig unzureichend.

Werden Basislacke eingesetzt, bei denen bei der Herstellung des Polyurethanharzes die Komponente (A) keine Polyesterdiole enthält,-deren Säurekomponente mindestens 60 Gew.% einer aliphatischen Dicarbonsäure mit mehr als 18 C-Atomen enthält (Vergleichsbeispiel 2 und 3), so zeigen die resultierenden Beschichtungen nur eine sehr schlechte Belastbarkeit im Schwitzwasserkonstantklima.

Weiterhin können die Basisbeschichtungszusammensetzungen in den zur Anwendung kommenden Applikationsgeräten problemlos verarbeitet werden.

## Ansprüche

1. Verfahren zur Herstellung eines mehrschichtigen, schützenden und/oder dekorativen Überzuges auf einer Substratoberfläche, bei welchem
(1) als Basisbeschichtungszusammensetzung eine wäßrige Dispersion aufgebracht wird, die
(a) als filmbildendes Material mindestens ein Polyurethanharz mit einer Säurezahl von 5 bis 70 mg KOH/g, welches herstellbar ist, indem aus
(A) einer Mischung aus linearen Polyetherdiolen und Polyesterdiolen,
(B) Diisocyanaten,
(C) Verbindungen, die zwei gegenüber Isocyanatgruppen reaktive Gruppen enthalten, wobei zumindest ein Teil der als Komponente (C) eingesetzten verbindungen mindestens eine zur Anionenbildung befähigte Gruppe aufweist, die vorzugsweise vor der Umsetzung neutralisiert worden ist, ein endständige Isocyanatgruppen aufweisendes Zwischenprodukt (Z) hergestellt worden ist, dessen freie Isocyanatgruppen anschließend mit
(D) mindestens drei Hydroxylgruppen enthaltenden Polyolen, vorzugsweise Triolen,
umgesetzt worden sind und das so gewonnene Reaktionsprodukt in eine wäßrige Phase überführt enden ist,
(b) Pigmente und
(c) weitere übliche Hilfsstoffe enthält
(2) aus der in Stufe (1) aufgebrachten Zusammensetzung ein Polymerfilm auf der Oberfläche gebildet wird,
(3) auf der so erhaltenen Basisschicht eine geeignete transparente Deckschichtzusammensetzung aufgebracht und anschließend
(4) die Basisschicht zusammen mit der Deckschicht eingebrannt wird,

dadurch gekennzeichnet, daß

I) als Komponente (A) eine Mischung aus 10 bis 90 mol% linearen Polyetherdiolen (A1) mit einem Molekulargewicht (Zahlenmittel) von 400 bis 2000 und 90 bis 10 mol% Polyesterdiolen (A2) mit einem Molekulargewicht (Zahlenmittel) von 400 bis 2000 eingesetzt wird, wobei die Summe aus (A1) und (A2) jeweils 100 mol% ergibt und wobei das Polyesterdiol (A2) hergestellt worden ist aus a) einem Diol und

b) einer Säurekomponente, die zu 60 bis 100 Gew.%, bevorzugt 100 Gew.%, bezogen auf die Säurekomponente, aus einer oder mehreren aliphatischen und/oder cycloaliphatischen Dicarbonsäuren mit mehr als 18 C-Atomen im Molekül und zu 40 bis 0 Gew.% aus einer oder mehreren Dicarbonsäuren mit 2 bis 18 C-Atomen im Molekül, besteht,

II) die Mengen der Komponenten (A), (B) und (C) so gewählt werden, daß das Äquivalentverhältnis der NCO-Gruppen zu der Summe der OH-Gruppen der Komponente (A) und der reaktiven Gruppen der Komponente (C) 2:1 bis 1,05:1, bevorzugt 1,5:1 bis 1,1:1 beträgt und

III) die Menge der Komponente (D) so gewählt wird, daß das Aquivalentverhältnis der OH-Gruppen der Komponente (D) zu den NCO-Gruppen des Zwischenprodukts (Z) 0,5:1 bis 4:1, bevorzugt 0,75:1 bis 3,5:1, beträgt.

2. Basisbeschichtungszusammensetzung zur Herstellung von mehrschichtigen, schützenden und/oder dekorativen Überzügen bestehend aus einer wäßrigen Dispersion, die

(a) als filmbildendes Material mindestens ein Polyurethanharz mit einer Säurezahl von 5 bis 70 mg KOH/g, welche herstellbar ist, indem aus

(A) einer Mischung aus linearen Polyetherdiolen und Polyesterdiolen,

(B) Diisocyanaten,

(C) Verbindungen, die zwei gegenüber Isocyanatgruppen reaktive Gruppen enthalten, wobei zumindest ein Teil der als Komponente (C) eingesetzten Verbindungen mindestens eine zur Anionenbildung befähigte Gruppe aufweist, die vorzugsweise vor der Umsetzung neutralisiert worden ist, ein endständige Isocyanatgruppen aufweisendes Zwischenprodukt (Z) hergestellt worden ist, dessen freie Isocyanatgruppen anschließend mit (D) mindestens drei Hydroxylgruppen enthaltenden Polyolen, vorzugsweise Triolen,

umgesezt worden sind und das so gewonnene Reaktionsprodukt in eine wäßrige Phase überführt worden ist,

(b) Pigmente und

(c) weitere übliche Hilfsstoffe

enthält, dadurch gekennzeichnet, daß

I) als komponente (A) eine Mischung aus 10 bis 90 mol% linearen Polyetherdiolen (A1) mit einem Molekulargewicht (Zahlenmittel) von 400 bis 2000 und 90 bis 10 mol% Polyesterdiolen (A2) mit einem Molekulargewicht (Zahlenmittel) von 400 bis 2000 eingesetzt wird, wobei die Summe aus (A1) und (A2) jeweils 100 mol% ergibt und wobei das Polyesterdiol (A2) hergestellt worden ist aus

a) einem Diol und

b) einer Säurekomponente, die zu 60 bis 100 Gew.%, bevorzugt 100 Gew.%, bezogen auf die Säurekomponente, aus einer oder mehreren aliphatischen und/oder cycloaliphatischen Dicarbonsäuren mit mehr als 18 C-Atomen im Molekül und zu 40 bis 0 Gew.% aus einer oder mehreren Dicarbonsäuren mit 2 bis 18 C-Atomen im Molekül, besteht,

II) die Mengen der Komponenten (A), (B) und (C) so gewählt werden, daß das Äquivalentverhältnis der NCO-Gruppen zu der Summe der OH-Gruppen der Komponente (A) und der reaktiven Gruppen der Komponente (C) 2:1 bis 1,05:1, bevorzugt 1,5:1 bis 1,1:1, beträgt und

III) die enge der Komponente (D) so gewählt wird, daß das Äquivalentverhältnis der OH-Gruppen der Komponente (D) zu den NCO-Gruppen des Zwischenproduktes (Z) 0,5:1 bis 4:1, bevorzugt 0,75:1 bis 3,5:1, beträgt.

3. Verfahren zur Herstellung eines mehrschichtigen, schützenden und/oder dekorativen Überzuges auf einer Substratoberfläche, bei welchem

(1) als Basisbeschichtungszusammensetzung eine wäßrige Dispersion aufgebracht wird, die

(a) als filmbildendes Material mindestens ein Polyurethanharz mit einer Säurezahl von 5 bis 70 mg KOH/g, welches herstellbar ist, indem aus

(A) einer Mischung aus linearen Polyetherdiolen und Polyesterdiolen,

(B) Diisocyanaten,

(C) Verbindungen, die zwei gegenüber Isocyanatgruppen reaktive Gruppen enthalten, wobei zumindest ein Teil der als Komponente (C) eingesetzten Verbindungen mindestens eine zur Anionenbildung befähigte Gruppe aufweist, die vorzugsweise vor der Umsetzung neutralisiert worden ist, und

(D) mindestens drei Hydroxylgruppen enthaltende Polyole, vorzugsweise Triole,

miteinander umgesetzt worden sind und das so gewonnene Reaktionsprodukt in eine wäßrige Phase überführt worden ist,

(b) Pigmente und

(c) weitere übliche Hilfsstoffe enthält,

(2) aus der in Stufe (1) aufgebrachten Zusammensetzung ein Polymerfilm auf der Oberfläche gebildet wird,

(3) auf der so erhaltenen Basisschicht eine geeignete transparente Deckschichtzusammensetzung aufgebracht und anschließend

(4) die Basisschicht zusammen mit der Deckschicht eingebrannt wird,

dadurch gekennzeichnet, daß

I) als Komponente (A) eine Mischung aus 10 bis 90 mol% linearen Polyetherdiolen (A1) mit einem Molekulargewicht (Zahlenmittel) von 400 bis 2000 und 90 bis 10 mol% Polyesterdiolen (A2) mit einem Molekulargewicht (Zahlenmittel) von 400 bis 2000 eingesetzt wird, wobei die Summe aus (A1) und (A2) jeweils 100 mol% ergibt und wobei das Polyesterdiol (A2) hergestellt worden ist aus

a) einem Diol und

b) einer Säurekomponente, die zu 60 bis 100 Gew.%, bevorzugt 100 Gew.%, bezogen auf die Säurekomponente, aus einer oder mehreren aliphatischen und/oder cycloaliphatischen Dicarbonsäuren mit mehr als 18 C-Atomen im Molekül und zu 40 bis 0 Gew.% aus einer oder mehreren Dicarbonsäuren mit 2 bis 18 C-Atomen im Molekül, besteht,

II) die Mengen der Komponenten (A), (B), (C) und (D) so gewählt werden, daß das Äquivalentverhältnis der NCO-Gruppen der Komponente (B) zu der Summe der gegenüber NCO-Gruppen reaktiven Gruppen der Komponenten (A), (C) und (D) 2:1 bis 1:2, bevorzugt 1,5:1 bis 1:1,5, beträgt.

4. Basisbeschichtungszusammensetzung zur Herstellung von mehrschichtigen, schützenden und/oder dekorativen Überzügen bestehend aus einer wäßrigen Dispersion, die

(a) als filmbildendes Material mindestens ein Polyurethannarz mit einer Säurezahl von 5 bis 70 mg KOH/g, welches herstellbar ist, indem

(A) eine Mischung aus linearen Polyetherdiolen und Polyesterdiolen,

(B) Diisocyanate,

(C) Verbindungen, die zwei gegenüber Isocyanatgruppen reaktive Gruppen enthalten, wobei zumindest ein Teil der als Komponente (C) eingesetzten Verbindungen mindestens eine zur Anionenbildung befähigte Gruppe aufweist, die vorzugsweise vor der Umsetzung neutralisiert worden ist, und

(D) mindestens drei Hydroxylgruppen enthaltende Polyole, vorzugsweise Triole,

miteinander umgesetzt worden sind und das so gewon- nene Reaktionsprodukt in eine wäßrige Phase überführt worden ist, (b) Pigmente und

(c) weitere übliche Hilfsstoffe

enthält, dadurch gekennzeichnet, daß

I) als Komponente (A) eine Mischung aus 10 bis 90 mol% linearen Polyetherdiolen (A1) mit einem Molekulargewicht (Zahlenmittel) von 400 bis 2000 und 90 bis 10 mol% Polyesterdiolen (A2) mit einem Molekulargewicht (Zahlenmittel) von 400 bis 2000 eingesetzt wird, wobei die Summe aus (A1) und (A2) jeweils 100 mol% ergibt und wobei das Polyesterdiol (A2) hergestellt worden ist aus

a) einem Diol und

b) einer Säurekomponente, die zu 60 bis 100 Gew.%, bevorzugt 100 Gew.%, bezogen auf die Säurekomponente, aus einer oder mehreren aliphatischen und/oder cycloaliphatischen Dicarbonsäuren mit mehr als 18 C-Atomen im Molekül und zu 40 bis 0 Gew.% aus einer oder mehreren Dicarbonsäuren mit 2 bis 18 C-Atomen im Molekül, besteht,

II) die Mengen der Komponenten (A), (B) und (C) so gewählt werden, daß das Äquivalentverhältnis der NCO-Gruppen der Komponente (B) zu der Summe der gegenüber NCO-Gruppen reaktiven Gruppen der Komponenten (A), (C) und (D) 2:1 bis 1:2, bevorzugt 1,5:1 bis 1:1,5, beträgt.

5. Basisbeschichtungszusammensetzung oder Verfahren nach einem der Ansprüche 1 bis 4, dadurch gekennzeichnet, daß als Komponente (A) eine Mischung aus 20 bis 80 mol% linearen Polyetherdiolen (A1) und 80 bis 20 mol% Poly-esterdiolen (A2) eingesetzt wird.

6. Basisbeschichtungszusammensetzung oder Verfahren nach einem der Ansprüche 1 bis 4 dadurch gekennzeichnet, daß als Komponente (A) eine Mischung aus 25 bis 70 mol% linearen Polyetherdiolen (A1) und 75 bis 30 mol% Polyesterdiolen (A2) eingesetzt wird.

7. Basisbeschichtungszusammensetzung oder Verfahren nach einem der Ansprüche 1 bis 6, dadurch gekennzeichnet, daß zum Aufbau des Polyesterdiols (A2) Dimerfettsäure als langkettige aliphatische Dicarbonsäure eingesetzt wird.

8. Basisbeschichtungszusammensetzung oder Verfahren nach einem der Ansprüche 1 bis 7, dadurch gekennzeichnet, daß als Komponente (D) Trimethylolpropan eingesetzt wird.

9. Basisbeschichtungszusammensetzung oder Verfahren nach einem der Ansprüche 1 bis 8, dadurch gekennzeichnet, daß die Basisbeschichtungszusammensetzung als zusätzliche Bindemittelkomponente ein wasserverdünnbares Melaminharz in einem Anteil von 1 bis 80 Gew.%, bevorzugt 20 bis 60 Gew.%, bezogen auf den Festkörpergehalt der Polyurethandispersion, enthält.

10. Basisbeschichtungszusammensetzung oder Verfahren nach einem der Ansprüche 1 bis 9, dadurch gekennzeichnet, daß die Basisbeschichtungszusammensetzung als weitere Bindemittelkomponente ein wasserverdünnbares Polyesterharz und/oder ein wasserverdünnbares Polyacrylatharz enthält, wobei das Gewichtsverhältnis Melaminharz zu Polyesterharz und/oder Polyacrylatharz 2:1 bis 1:4 beträgt und der Gesamtanteil an Melaminharz, Polyester und Polyacrylatharz, bezogen auf den Festkörpergehalt der Polyurethandispersion, 1 bis 80 Gew.%, bevorzugt 20 bis 60 Gew.%, beträgt.

11. Basisbeschichtungszusammensetzung oder Verfahren nach einem der Ansprüche 1 bis 10, dadurch gekennzeichnet, daß die Basisbeschichtungszusammensetzung als zusätzliche Bindemittelkomponente ein blockiertes Polyisocyanat, zusammen mit einem wasserverdünnbaren Polyesterharz und/oder einem wasserverdünnbaren Polyacrylatharz, enthält, wobei der Anteil an Polyisocyanat, Polyesterharz und/oder Polyacrylatharz insgesamt 1 bis 80 Gew.%, bezogen auf den Festkörpergehalt der Polyurethandispersion, beträgt.

12. Basisbeschichtungszusammensetzung oder Verfahren nach einem de Ansprüche 1 bis 11, dadurch gekennzeichnet, daß die Basisbeschichtungszusammensetzung 0,5 bis 25 Gew.%, bezogen auf den gesamten Festkörpergehalt an Bindemittel , Metallpigmente enthält.

13. Verwendung der Basisbeschichtungszusammensetzungen nach einem der Ansprüche 2 und 4 bis 12 für die Herstellung von mehrschichtigen, schützenden und/oder dekorativen Überzüge auf Substratoberflächen.

14. Substrat, beschichtet mit einem mehrschichtigen, schützenden un /oder dekorativen Überzug, der erhalten worden ist, indem

(1) Basisbeschichtungszusammensetzung nach einem der Ansprüche 2 und 4 bis 12 aufgebracht worden ist,

(2) aus der in Stufe (1) aufgebrachten Zusammensetzung ein Polymerfilm auf der Oberfläche gebildet worden ist,

(3) auf der so erhaltenen Basisschicht eine geeignete transparente Deckschicht-Zusammensetzung aufgebracht worden ist und anschließend

(4) die Basisschicht zusammen mit der Deckschicht eingebrannt worden ist.